# EUROPÄISCHE PATENTSCHRIFT

(11) **EP 2 596 326 B1**
(45) Veröffentlichungstag und Bekanntmachung des Hinweises auf die Patenterteilung: **13.04.2016**
(21) Anmeldenummer: 11748293.5
(22) Anmeldetag: 04.07.2011
(51) Int. Cl.: G01M 3/18

(54) **KOMPONENTE ZUM FÜHREN ODER AUFNEHMEN EINES FLUIDS UND VERFAHREN ZUM ÜBERPRÜFEN DER KOMPONENTE**
COMPONENT FOR CONDUCTING OR RECEIVING A FLUID, AND METHOD FOR TESTING THE COMPONENT
COMPOSANT POUR CONDUIRE OU RECEVOIR UN FLUIDE ET PROCÉDÉ DE VÉRIFICATION DU COMPOSANT

(30) Priorität: 21.07.2010 DE 102010031610
(43) Veröffentlichungstag der Anmeldung: 29.05.2013
(73) Patentinhaber: AREVA GmbH, 91052 Erlangen (DE)
(72) Erfinder: STROHMER, Franz, 96052 Bamberg (DE); SAALFRANK, Jens, 91094 Bräuningshof (DE)
(74) Vertreter: Meissner, Bolte & Partner GbR
(86) Internationale Anmeldenummer: PCT/EP2011/061234
(87) Internationale Veröffentlichungsnummer: WO 2012/022530

(56) Entgegenhaltungen:
- DE-A1- 4 137 108
- GB-A- 2 287 817
- US-A- 4 110 739
- US-A- 5 214 387
- US-A- 5 378 991

## Beschreibung

Verfahren zum Überprüfen einer Komponente zum Führen oder Aufnehmen eines Fluids.

Die Erfindung bezieht sich auf ein Verfahren zum Überprüfen einer Komponente zum Führen oder Aufnehmen eines Fluids, insbesondere auf eine Komponente eines fluidführenden Leitungssystems einer industriellen Anlage, insbesondere eines Leitungssystems eines tertiären Kühlkreislaufes eines Kernkraftwerkes.

Die Komponenten eines fluidführenden Leitungssystems in industriellen Anlagen, beispielsweise in Anlagen der chemischen Industrie oder in Kraftwerksanlagen, beispielsweise die Kühlleitungen im tertiären Kühlkreislauf eines Kernkraftwerks, bestehen häufig aus erdverlegten, innen und außen gummierten Stahlleitungen oder Betonrohren. Beide Rohrarten unterliegen jedoch einem Verschleiß durch Korrosion oder Erosion und müssen bei älteren Kernkraftwerksanlagen oftmals ersetzt werden. Besonders bei seewassergekühlten Kernkraftwerksanlagen stellt die Korrosion einer Stahlleitung ein großes Problem dar, sobald die Gummierungsschicht angegriffen oder beschädigt ist. Aus diesem Grund werden die aus Stahl oder Beton bestehenden Komponenten dieser Leitungssysteme durch Komponenten ersetzt, deren tragendes Strukturelement aus einem glasfaserverstärkten Kunststoff, beispielsweise ein aus Glasfasern und Epoxidharz (EP) bestehendes Verbundmaterial, aufgebaut sind, wobei die jeweiligen Komponenten sowohl an ihrer Innenseite als auch an ihrer Außenseite zusätzlich mit einer Schutz- oder Verstärkungsschicht versehen sind. Nachteilig an derartigen Komponenten ist jedoch ihre eingeschränkte Prüfbarkeit, da gängige Methoden wie beispielsweise Wirbelstromprüfung nicht anwendbar sind, da diese einen elektrisch leitfähigen Werkstoff voraussetzen. Ultraschallprüfverfahren sind zwar grundsätzlich möglich, sind aber aufgrund des komplexen Verbundaufbaus für den praktischen Einsatz nicht geeignet. Aus diesem Grund erfolgt zum gegenwärtigen Zeitpunkt die Prüfung derartiger, auf einem Glasfaser-Kunststoffverbund aufgebauter Komponenten, bei denen es sich nicht nur um Komponenten eines Leitungssystems sondern auch um mit einem Fluid befüllbare Behälter handeln kann, nur mit einer visuellen Inspektion, indem ein Manipulator in die zu prüfende Komponente eingesetzt und dessen Innenoberfläche mit einer Videokamera inspiziert wird. Die visuelle Inspektion ist jedoch schwierig, da die entleerten Komponenten in der Regel nass sind und sich teilweise Ablagerungen, Schlamm und Biofilm an den Innenwandungen befinden. Demzufolge lassen sich mit einer visuellen Inspektion nur auffällige Veränderungen an der Rohrinnenwand feststellen.

Zur Überwachung eines mit einem Fluid gefüllten Behälters auf Leckagen oder Beschädigung eines inneren Liners ist es aus den Druckschriften US 5, 214, 387 A, US 4,110,739 A und GB 2 287 817 A bekannt, in der Behälterwand eine leitfähige Zwischenlage anzuordnen und den elektrischen Widerstand zwischen dieser Zwischenlage und einem innerhalb der Wand zwischen dieser Zwischenlage und Innenwand liegenden elektrischen Kontakt (US 5,214,387 A) oder zwischen dieser Zwischenlage und einem im Behälter angeordneten Kontakt (US 5,214,387 A, US 4,110,739 A, GB 2 287 817 A) zu erfassen. Dokument US 5,378,991 offenbart ein Verfahren gemäß dem Oberbegriff von Anspruch 1.

Der Erfindung liegt daher die Aufgabe zu Grunde, ein Verfahren zum Überprüfen einer Komponente zum Führen oder Aufnehmen eines Fluids anzugeben, die auf der Basis eines glasfaserverstärkten Kunststoffes aufgebaut ist und auf einfache Weise auf das Vorhandensein von Schäden überprüft werden kann, wenn das geführte fluid nicht leitfähig ist.

Hinsichtlich des Verfahrens wird die Aufgabe gemäß der Erfindung gelöst mit den Merkmalen des Patentanspruches 1. Gemäß diesen Merkmalen umfasst die Wand der Komponente eine Tragstruktur aus einem glasfaserverstärkten Kunststoff, die an ihrer Innen- und Außenoberfläche mit einer elektrisch isolierenden inneren bzw. äußeren Schutzschicht versehen ist, wobei zwischen der, die Komponente vor Beschädigung von innen bzw. außen schützenden inneren Schutzschicht und der Tragstruktur eine mit einem elektrischen Anschluss versehene elektrisch leitfähige innere Zwischenlage und zwischen der äußeren Schutzschicht und der Tragstruktur eine mit einem elektrischen Anschluss versehene und von der inneren Zwischenlage elektrisch isolierte elektrisch leitfähige äußere Zwischenlage angeordnet ist.

Als Komponente im Sinne der vorliegenden Erfindung sind dabei sowohl Rohrleitungen und Komponenten eines fluidführenden Leitungssystems als auch mit einem Fluid befüllbare, d. h. ein Fluid aufnehmende stationäre oder transportable Behälter zu verstehen.

Durch diese Maßnahmen können durch eine Messung des elektrischen Widerstandes zwischen der inneren und der äußeren Zwischenlage auf einfache Weise Leckagen in der Tragstruktur erkannt werden, wenn das in der Komponente befindliche Fluid von sich aus elektrisch leitfähig ist oder durch Zusatz geeigneter chemischer Substanzen für den Zeitpunkt der Messung elektrisch leitfähig gemacht worden ist,

Da die Herstellung der Tragstruktur in der Regel in einem sogenannten Wickelverfahren erfolgt, bei dem harzgetränkte Glasfaserrovings kreuzförmig auf einen rotierenden Stahlkern gewickelt werden, ist die Herstellung der Komponente vereinfacht, wenn die Zwischenlage oder die Zwischenlagen durch ein elektrisch leitfähiges Gewebe gebildet sind, da dieses in derselben Wickel- oder Auftragstechnik aufgebracht werden kann wie die Tragstruktur.

Hinsichtlich der Verfahrens wird die Aufgabe gemäß der Erfindung gelöst mit den Merkmalen des Patentanspruches 1, gemäß dem der elektrische Widerstand zwischen der äußeren und der inneren Zwischenlage erfasst wird. Auf diese Weise können Defekte in der Tragstruktur durch Vornehmen einer einfachen elektrischen Durchgangsprüfung, das heißt durch Messen des elektrischen Widerstandes zwischen der äußeren und der inneren Zwischenlage erfasst werden, wenn das Fluid durch Beimengung von Zusatzstoffen elektrisch leitfähig gemacht worden ist.

Zur weiteren Erläuterung der Erfindung wird auf die in den Figuren dargestellten Ausführungsbeispiele verwiesen. Es zeigen:
Fig.1 einen Ausschnitt aus der Wand einer Komponente gemäß der Erfindung in einem Querschnitt,
Fig.2 ein Prinzipbild einer Überwachungseinrichtung eines aus einer Mehrzahl von zu überwachenden Komponenten zusammengesetzten Leitungssystems.

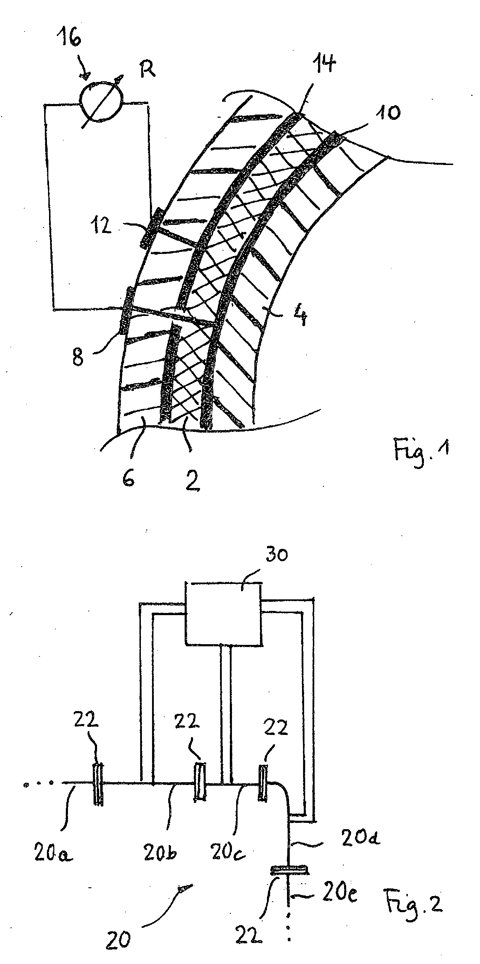

Gemäß Fig.1 ist die Wand einer Komponente eines fluidführenden Leitungssystems aus einer als tragendes Wandteil dienenden Tragstruktur 2 aufgebaut. Die Tragstruktur 2 ist elektrisch nicht leitfähig und besteht aus einem glasfaserverstärkten Verbundwerkstoff. An ihrer Innen- und Außenoberfläche ist die Wand mit einer elektrisch isolierenden inneren bzw. äußeren Schutzschicht 4 bzw. 6 versehen. Zwischen der inneren Schutzschicht 4 und der Tragstruktur 2 befindet sich eine mit einem elektrischen Anschluss 8 versehene elektrisch leitfähige innere Zwischenlage 10 und zwischen der äußeren Schutzschicht 6 und der Tragstruktur 2 befindet sich eine mit einem elektrischen Anschluss 12 versehene und von der inneren Zwischenlage 10 durch die Tragstruktur 2 elektrisch isolierte ebenfalls elektrisch leitfähige äußere Zwischenlage 14. Mit anderen Worten: Die Tragstruktur 2 ist auf ihrer Innen- und Äußenoberfläche jeweils mit einer elektrisch leitfähigen inneren bzw. äußeren Zwischenlage 10 bzw. 14 versehen, auf denen die innere bzw. äußere Schutzschicht 4 bzw. 6 aufgebracht sind. Innere und äußere Schutzschicht 4 bzw. 6 schützen die Komponente vor Beschädigung von innen bzw. außen. Leitungskomponenten, in denen mit dem Kühlmittel abrasive Partikel, z.B. Sand mitgeführt werden, werden in der Regel mit einer etwa 2mm dicken inneren Schutzschicht 4 aus Gummi versehen.

Die elektrischen Anschluss 8 bzw. 12 der inneren und äußeren elektrisch leitfähigen Zwischenlage 10 bzw. 14 sind von außen zugänglich, beispielsweise an der Außenseite der äußeren Schutzschicht 6 angeordnet.

Die elektrisch leitfähigen Zwischenlagen 10 und 14 sind aus einem Netz oder einem Gewebe, beispielsweise ein feines Silbernetz, ein Edelstahlgewebe, ein Glasfasernetz oder -Gewebe mit eingewobenen Metallfäden oder einem Kohlefaserverbundwerkstoff gefertigt.

Mit einer Messeinrichtung 16 kann nun der elektrische Widerstand R zwischen der inneren und der äußeren Zwischenlage 10 bzw. 14 überwacht werden. Im Falle einer Leckage in der Tragstruktur 2 und in der inneren Schutzschicht 4 dringt das im Inneren der Komponente befindliche Fluid in die Tragstruktur 2 ein und durchdringt diese bis zur äußeren Zwischenlage 14. Wenn das im Inneren der Komponente befindliche Fluid, in der Regel Wasser, elektrisch leitfähig ist, werden dementsprechend die elektrischen Isolationseigenschaften der Tragstruktur 2 verschlechtert und es wird der ohmsche Widerstand R zwischen der inneren- und der äußeren Zwischenlage 10 bzw. 14 verringert. Elektrisch nicht leitfähige Fluide werden für die Dauer der Messung durch Beimengung von Zusatzstoffen leitfähig gemacht. Auf diese Weise ist eine einfache und sichere Überwachung der Komponente auf das Auftreten einer Undichtigkeit möglich.

Gemäß Fig.2 ist zur Überwachung eines aus mehreren Komponenten 20a-e aufgebauten Leitungssystems 20, in der Figur veranschaulicht durch miteinander über Flansche 22 verbundene Rohrleitungsteile, eine zentrale Überwachungseinrichtung 30 vorgesehen, in der die ohmschen Widerstände zwischen den leitfähigen Zwischenlagen der einzelnen Komponenten 20a-e erfasst werden. Auf diese Weise können sowohl das Auftreten einer Leckage im Leitungssystem automatisch detektiert als auch die betroffene Komponente erkannt werden.

## Patentansprüche

1. Verfahren zum Überprüfen einer Komponente zum Führen oder Aufnehmen eines Fluids, insbesondere Komponente (20a-e) eines fluidführenden Leitungssystems (26) einer industriellen Anlage, insbesondere eines Leitungssystems eines tertiären Kühlkreislaufes eines Kernkraftwerkes, deren Wand eine Tragstruktur (2) aus einem glasfaserverstärkten Kunststoff umfasst und an ihrer Innen- und Außenoberfläche mit einer elektrisch isolierenden inneren bzw. äußeren Schutzschicht (4 bzw. 6) versehen ist, wobei zwischen der inneren Schutzschicht (4) und der Tragstruktur (2) eine mit einem elektrischen Anschluss (8) versehene elektrisch leitfähige innere Zwischenlage (10) und zwischen der äußeren Schutzschicht (6) und der Tragstruktur (2) eine mit einem elektrischen Anschluss (12) versehene und von der inneren Zwischenlage (10) elektrisch isolierte elektrisch leitfähige äußere Zwischenlage (14) angeordnet ist **dadurch gekennzeichnet, dass** ein nicht leitfähiges Fluid durch Beimengung von Zusatzstoffen für die Dauer der Messung leitfähig gemacht wird und der elektrische Widerstand (R) zwischen der äußeren und der inneren Zwischenlage (10,14) erfasst wird.

2. Verfahren nach Anspruch 1, **dadurch gekennzeichnet, dass** die Zwischenlagen (10,14) durch ein elektrisch leitfähiges Gewebe gebildet sind.

## Claims

1. Method to check a component for guiding or receiving a fluid, in particular a component (20a-e) of a fluid-guiding piping system (26) of an industrial plant, in particular a piping system of a tertiary cooling circuit of a nuclear power station, the wall of which comprises a support structure (2) made from a glass fibre-reinforced plastic and is provided on its inner and outer surface with an electrically insulating inner or outer protective layer (4 or 6), wherein an electrically conductive inner intermediate layer (10) provided with an electrical connection (8) is arranged between the inner protective layer (4) and the support structure (2), and an electrically conductive outer intermediate layer (14) which is provided with an electrical connection (12) and which is electrically insulated from the inner intermediate layer (10) is arranged between the outer protective layer (6) and the support structure (2), **characterised in that** a non-conductive fluid is made conductive by admixture of additives for the duration of the measurement and the electrical resistance (R) between the outer and the inner intermediate layer (10, 14) is recorded.

2. Method according to claim 1, **characterised in that** the intermediate layers (10, 14) are formed by an electrically conductive fabric.

## Revendications

1. Procédé de vérification d'un composant pour conduire ou recevoir un fluide, en particulier un composant d'un système de canalisation (26) d'une installation industrielle conduisant un fluide, en particulier d'un système de canalisation d'un circuit de refroidissement tertiaire d'une centrale nucléaire, dont la paroi comprend une structure de support (2) en plastique renforcé par des fibres de verre et pourvue sur sa surface intérieure et extérieure d'une couche de protection intérieure ou extérieure (4 ou 6) électriquement isolante, une couche intermédiaire intérieure (10) électriquement conductrice pourvue d'une connexion électrique (8) étant disposée entre la couche de protection intérieure (4) et la structure de support (2) et une couche intermédiaire extérieure (14) électriquement conductrice pourvue d'une connexion électrique (12) et électriquement isolée de la couche intermédiaire intérieure (10) étant disposée entre la couche de protection extérieure (6) et la structure de support (2), **caractérisé en ce qu'**un fluide non conducteur est transformé en fluide conducteur pour la durée de la mesure grâce à l'ajout d'additifs et la résistance électrique (R) entre la couche intermédiaire extérieure (14) et la couche intermédiaire intérieure (10) est enregistrée.

2. Procédé selon la revendication 1, **caractérisé en ce que** les couches intermédiaires (10, 14) sont formées d'un tissu électriquement conducteur.
